# EUROPÄISCHE PATENTSCHRIFT

(11) **EP 3 714 670 B1**
(45) Veröffentlichungstag und Bekanntmachung des Hinweises auf die Patenterteilung: **15.06.2022**
(21) Anmeldenummer: 20000116.2
(22) Anmeldetag: 19.03.2020
(51) Int. Cl.: A01B 71/08, A01F 15/08

(54) **LANDWIRTSCHAFTLICHE RUNBALLENPRESSE**
AGRICULTURAL ROUND BALING PRESS
PRESSE À BALLES RONDES AGRICOLE

(30) Priorität: 29.03.2019 DE 202019001460 U
(43) Veröffentlichungstag der Anmeldung: 30.09.2020
(73) Patentinhaber: Maschinenfabrik Bernard Krone GmbH & Co. KG, 48480 Spelle (DE)
(72) Erfinder: Wermes, Henrik, 49733 Haren (DE); Kalverkamp, Felix, 45665 Recklinghausen (DE)

(56) Entgegenhaltungen:
- EP-A1- 3 222 134
- EP-A1- 3 406 132
- DE-A1- 2 530 249
- DE-A1-102017 003 447
- US-B1- 7 318 376

## Beschreibung

Die Erfindung betrifft eine landwirtschaftliche Rundballenpresse nach dem Oberbegriff des Anspruchs 1 mit einer Deichsel zum Anhängen an eine Zugmaschine zum Aufnehmen und Pressen von landwirtschaftlichem Erntegut, wie Heu, Stroh, Gras oder dergleichen, umfasst unter anderem eine Ballenformeinrichtung, in der ein rollenförmiger Erntegutballen geformt wird, Funktionseinheiten, wie eine Bindevorrichtung und/oder Wickelvorrichtung zur Einfassung des Erntegutballens mit einem Bindematerial und eine an der landwirtschaftlichen Rundballenpresse in Fahrtrichtung vorne angebrachten Verkleidung zur Abdeckung der Funktionseinheiten.

Landwirtschaftliche Rundballenpressen werden von einer Zugmaschine über ein landwirtschaftliches Feld gezogen, um Erntegut, welches reihenförmig in Schwaden auf dem Feld liegt, aufzunehmen und zu einem runden Erntegutballen zu pressen. An der Rundballenpresse ist eine Aufnahmevorrichtung, auch bekannt als Pick-up, angebracht. Mit Hilfe der Pick-up wird das Erntegut von dem Feld aufgenommen. Durch dem Förderrotor, welcher auch als Schneidrotor ausbildet sein kann und dem Zinkenrotor, wird das Erntegut in die Ballenformeinrichtung, auch bekannt als Presskammer, gefördert. Durch Pressmittel, wie Riemen und Walzen oder Stabelevatoren, wird das Erntegut gefördert, gepresst und zu einem runden Erntegutballen geformt. Damit die runden Erntegutballen nach ihrem Ausstoß aus der Presskammer ihre Form beibehalten, werden sie in der Bindevorrichtung und/oder Wickelvorrichtung mit Bindematerial, beispielsweise Bindegarn, Bindenetz oder Bindefolie, umschlungen.

Bei der Förderung des Ernteguts und des Pressvorgangs kommt es vor, dass das Erntegut aus der Presskammer austritt und aus der Rundballenpresse herausfällt. Da die Erntegutförderung teilweise außerhalb der Presskammer erfolgt, fällt Erntegut an Übergangstellen im Bereich der umlaufenden Pressmittel heraus. Dadurch entsteht eine Ansammlung des Ernteguts auf der Verkleidung im vorderen Bereich oberhalb von Funktionseinheiten, wie die Bindevorrichtung und/oder Wickelvorrichtung. Dieses austretende Erntegut fällt teilweise in die Bindevorrichtung und/oder Wickelvorrichtung und erschwert das Netzeinlegen zum Einfassen des fertigen Erntegutballens. Wenn das Netzeinlegen durch Erntegut, welches in die Bindevorrichtung und/oder Wickelvorrichtung gefallen ist, behindert oder gestört wird, kann nicht sichergestellt werden, dass die Netzbindung korrekt abläuft. Nicht vollständig bzw. nicht korrekt mit Bindenetz oder Bindefolie eingefasste Erntegutballen können zumindest teilweise auseinanderfallen und können hinterher nicht ordentlich transportiert werden. Wertvolles Erntegut bleibt auf dem Feld liegen. Dies gilt es zu verhindern, indem das Netzeinlegen nicht behindert wird. Es können unnötige Stillstandzeiten der Rundballenpresse entstehen, da der Fehler der unkorrekten Einfassung der Erntegutballen vom Fahrer erkannt und behoben werden muss. Diese Vorgänge können wiederholt auftreten.

Ein weiteres Problem bei der Förderung des Ernteguts, wobei Erntegut aus der Presskammer austritt und aus der Rundballenpresse herausfällt, besteht darin, dass das Erntegut teilweise auf die Deichsel der landwirtschaftlichen Rundballenpresse fällt. Die landwirtschaftliche Rundballenpresse ist anhand der Deichsel mit dem Zugfahrzeug verbunden. Erntegutablagerungen auf der Deichsel gilt es zu verhindern, da dem Fahrer dadurch die Sicht auf die Bindevorrichtung und/oder Wickelvorrichtung versperrt wird. So kann der Fahrer den Bindevorgang nicht beobachten. Wie bereits oben erwähnt, kann es vorkommen, dass Fehler bei der Bindung und/oder Wicklung entstehen. Mit versperrter Sicht auf die Bindevorrichtung und/oder Wickelvorrichtung, kann der Fahrer bei Fehlern bei der Bindung nicht reagieren.

Erntegutablagerungen auf der Deichsel führen beim Verlassen des Feldes zu erheblichen Verunreinigungen der genutzten Verkehrswege. Die Erntegutablagerungen auf der Deichsel können z.B. durch Vibrationen auf die Straße fallen. Verunreinigungen der Straßen müssen sofort beseitigt werden. Ansonsten entstehen unnötig hohe Kosten durch behördlich beauftragte Straßenreinigungsunternehmen und/oder Bußgelder. Sollte es durch die Verunreinigung zu einem Verkehrsunfall gekommen sein, bevor eine Reinigung erfolgt ist, kann dem Verursacher der Verunreinigung durchaus eine Teilschuld am Unfall zugesprochen werden. In diesem Fall wären weitere Kosten bereits nicht zu vermeiden.

Eine weitere Gefahr besteht darin, dass sich Erntegutablagerungen leicht entzünden können. Bewegende Komponenten, wie z. B. die Zapfwelle, verursachen Wärme. Funkenflug von Antriebseinheiten können Erntegutablagerungen auf der Deichsel entzünden und einen Brand auslösen. Elektrokabel können ebenfalls Wärme und Funkenflug erzeugen und Erntegutablagerungen unter ungünstigen Bedingungen in Brand stecken. Es kann zu einem Brand der Rundballenpresse oder sogar der gesamten Maschinenkombination, bestehend aus Traktor und Rundballenpresse, kommen.

Zum Wechsel des Bindematerials muss der Bediener möglicherweise auf die Deichsel klettern, um an die Bindevorrichtung und/oder Wickelvorrichtung zu gelangen. Wenn sich auf der Deichsel Erntegutablagerungen befinden, kann der Bediener abrutschen und sich verletzen.

Die Druckschrift EP 3 222 134 A1 offenbart eine Abstreifereinrichtung zur Verminderung von Anhaftungen an einem mit einem Ballen zusammenwirkenden Pressmittel einer landwirtschaftlichen Rundballenpresse.

Im Stand der Technik sind die oben genannten Probleme der Erntegutablagerungen bekannt, aber wurden bisher nicht behoben. Beispielsweise sind bei der eigenen Rundballenpresse "Comprima" die umlaufenden Presselemente von außen deutlich sichtbar. Aus den umlaufenden Presselementen tritt Erntegut aus, lagert sich auf der Verkleidung ab und fällt entweder in die Bindevorrichtung, Wickelvorrichtung oder auf die Deichsel.

Die vorliegende Erfindung hat sich die Aufgabe gestellt eine landwirtschaftliche Rundballenpresse mit einer verbesserten Verkleidung anzubieten, um Erntegutablagerungen auf der Deichsel und/oder in der Bindevorrichtung und/oder Wickelvorrichtung entgegenzuwirken.

Diese erfindungsgemäße Aufgabe wird durch eine landwirtschaftliche Rundballenpresse gemäß den Merkmalen des Anspruchs 1 gelöst, wobei vorteilhafte Weiterbildungen aus den weiteren Ansprüchen und den Ausführungsbeispielen hervorgehen.

Die erfindungsgemäße landwirtschaftliche Rundballenpresse mit einer Deichsel zum Anhängen an eine Zugmaschine zum Aufnehmen und Pressen von landwirtschaftlichem Erntegut, wie Heu, Stroh, Gras oder dergleichen mit einer Ballenformeinrichtung, bei der während des Pressvorgangs im Bereich umlaufender Pressmittel Erntegut austritt und in einen vorderen Bereich der landwirtschaftlichen Rundballenpresse oberhalb von Funktionseinheiten, wie einer Bindevorrichtung und/oder Wickelvorrichtung gefördert wird, wobei dieser Bereich von einer Verkleidung wenigstens teilweise abgedeckt ist, wobei die Verkleidung entlang einer vertikalen Mittelebene eine Erhebung zur Abweisung von austretendem Erntegut aufweist.

Erfindungswesentlich ist dabei, dass die Verkleidung der landwirtschaftlichen Rundballenpresse eine Erhebung aufweist, an der verlorenes Erntegut abführbar ist, sodass Erntegutablagerungen auf der Deichsel und/oder in der Bindevorrichtung und/oder Wickelvorrichtung vermeidbar sind. Das verlorene Erntegut fällt in Fahrtrichtung vorne auf den Boden und wird von der Pick-up wieder aufgenommen. So gelangt das verlorene Erntegut nachhaltig wieder in den Erntezyklus und kann zum Erntegutballen verarbeitet werden.

Die Erhebung in der Verkleidung kann verschiedene Ausführungen aufweisen. Vorzugsweise erstreckt sich die Erhebung in der Mitte der Verkleidung in Fahrtrichtung vorne. Links und rechts, also beidseitig, von der Erhebung ist die Verkleidung in der Verkleidungsgrundhöhe. Entlang den Bereichen auf der Verkleidungsgrundhöhe ist das verlorene Erntegut abführbar. Möglicherweise ist die Erhebung in der Verkleidung an der vertikalen Mittelebene seitlich verschoben.

In einer bevorzugten Variante ist die Erhebung in der Verkleidung so ausgeprägt, dass der obere Teil der Erhebung schmaler als der untere Teil der Erhebung ist. Als oberer Teil der Erhebung ist gleichzeitig der hintere Teil der Erhebung definiert. Der untere Teil der Erhebung ist gleichzeitig als vorderer Teil der Erhebung definiert. Der vordere Teil erstreckt sich in Bezug auf die Fahrtrichtung vorne. In einer effektiven Ausführungsform läuft das oberste Ende der Erhebung spitz zu. Möglichkeiten zur Erntegutablagerungen werden so möglichst gering gehalten. Der untere Teil der Erhebung erstreckt sich mindestens über die Breite der Deichsel. Die Breite der Erhebung am unteren Teil ist nur minimal breiter als die Breite der Deichsel. So ist sichergestellt, dass das Erntegut von oben in zwei Bahnen auf der Verkleidungsgrundhöhe aufgeteilt wird. Das austretende Erntegut rutscht vom oberen Teil der Verkleidung an der Erhebung vorbei. Weil sich die Erhebung in etwa vertikal zur Mittelebene erstreckt und die Deichsel sich unter der Verkleidung auf der vertikalen Mittelebene befindet, wird das Erntegut an der Deichsel vorbeigeführt und fällt in Fahrtrichtung vorne auf den Boden. Das heruntergefallene Erntegut wird von der landwirtschaftlichen Rundballenpresse mithilfe eines Aufnahmemittels, wie der Pick-up, wieder aufgenommen und in den Pressprozess einbezogen.

In einer weiteren Ausführungsform kann die Erhebung in der Verkleidung kreisförmig oder oval ausgeprägt sein. Auch hier erstreckt sich die Erhebung über die vertikale Mittelebene der Verkleidung. Dabei wird das austretende Erntegut ebenfalls an der Deichsel vorbeigeführt.

Eine weitere denkbare Ausführung sieht vor, dass die Erhebung in der Verkleidung dachförmig mit Kehlen ausgeprägt ist. Die Erhebung bildet sich wie ein Satteldach aus. An den tiefergelegenen Bereichen treffen Dachflächen aufeinander und bilden Kehlen, sodass das verlorene Erntegut herunterrutschen kann.

Die Höhe der Erhebung in der Verkleidung gegenüber der Verkleidungsgrundhöhe weist mindestens 30mm auf. Da das verlorene Erntegut nicht über die Erhebung rutschen soll, muss die Erhebung in der Verkleidung eine Mindesthöhe aufweisen. Erfahrungsberichte zeigen, dass die Erhebung mindestens 30mm betragen muss. Die maximal mögliche Höhe der Erhebung kann bis zu 130mm betragen. In einer alternativen Ausführungsform weist die Erhebung in der Verkleidung ein separates Bauteil auf. Das separate Bauteil ist mit der Verkleidung verbindbar. Im Maschinenbaubereich sind verschiedene Möglichkeiten bekannt, um Bauteile zu verbinden. Das separate Bauteil ist mit der Verkleidung durch Nieten, Kleben, Schrauben, Schweißen, Klemmen oder Einpressen verbindbar. Die Verkleidung und das separate Bauteil können unterschiedliches Material aufweisen.

Vorzugweise ist die Erhebung in der Verkleidung stoffschlüssig ausgeprägt. Dabei besteht die Verkleidung aus einem Teil. Mögliches Herstellverfahren ist die Umformung.

In den Bereichen der Verkleidung, die tiefer als die Erhebung gelegen sind, ist eine Neigung gegenüber der Bodenebene in Fahrtrichtung vorgesehen. Die Neigung dient dem Fluss des verlorenen Ernteguts in Richtung des Bodens. Damit das verlorene Erntegut über die Verkleidung rutschen kann, beträgt der Winkel der Neigung gegenüber der Bodenebene in Fahrtrichtung mindestens 15°. Vorstellbar ist auch ein Winkel von bis zu 75°.

In einer weiteren Ausführungsform schließt die erfindungsgemäße Verkleidung an seitlichen Schutzvorrichtungen der landwirtschaftlichen Rundballenpresse an. Der Spalt zwischen Schutzvorrichtung und Verkleidung weist keinen Spielraum auf. Vorzugsweise gelangt kein Erntegut durch den Spalt.

In einer bevorzugten Ausführungsform weist die Verkleidung ein Material mit einer glatten Oberfläche auf. Denkbar sind Metallbleche, GFK oder Kunststoffe. Bei einer glatten Oberfläche der Verkleidung rutscht das verlorene Erntegut besser herunter als bei einem Material mit einer rauen Oberfläche.

Ein Ausführungsbeispiel der Erfindung ist in der Zeichnung dargestellt und wird nachfolgend beschrieben. In der Zeichnung zeigt:

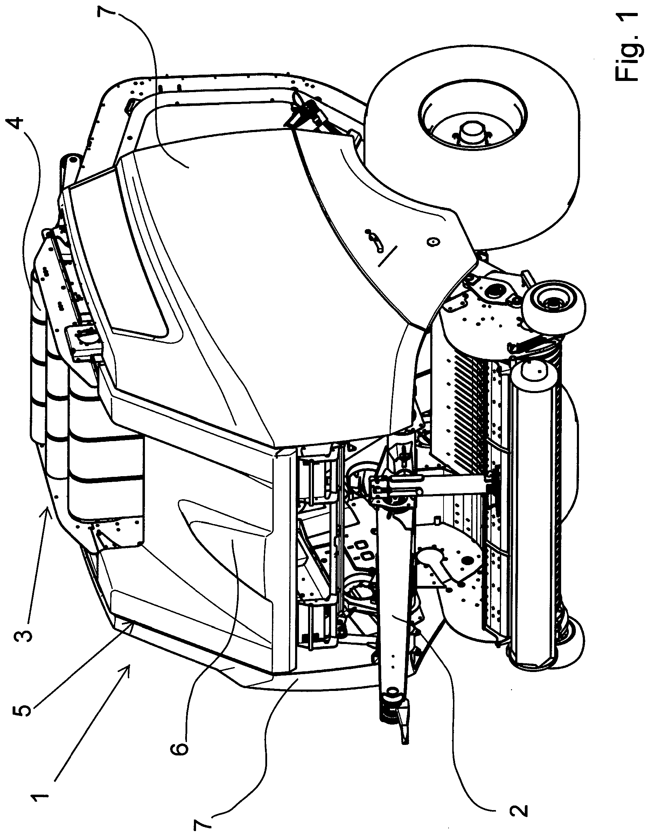

**Fig.1****:** Eine landwirtschaftliche Rundballenpresse mit einer Erhebung in der Verkleidung nach der Erfindung in perspektivischer Ansicht.

In der **Fig.1** ist eine landwirtschaftliche Rundballenpresse 1 dargestellt, die mit einer Verkleidung 5 mit einer Erhebung 6 ausgestattet ist. Die dargestellte Verkleidung 5 ist zwischen zwei seitlichen Schutzvorrichtungen 7 oberhalb von Funktionseinheiten befestigt. Zweckgemäß verhindert die Verkleidung 5 mit der Erhebung 6 Erntegutablagerungen in den Funktionseinheiten, sowie auf der Deichsel 2.

Die Verkleidung 5 mit der Erhebung 6 besteht aus einem Teil. Als Material wurde GFK mit einer glatten Oberfläche gewählt. Erntegutablagerungen auf der Verkleidung 5 mit glatter Oberfläche sind so einfach abführbar.

Die Erhebung 6 in der Verkleidung 5 befindet sich auf der vertikalen Mittelebene. Die Erhebung 6 erstreckt sich von dem unteren Teil der Verkleidung 5 bis über die Mitte der Verkleidung 5. Die Breite des unteren Teils der Erhebung 6 weist in etwa die gleiche Breite wie die Deichsel 2 auf. Der Verlauf vom unteren Teil der Erhebung 6 bis zum oberen Teil der Erhebung 6 prägt sich verjüngend aus. Der oberste Teil der Erhebung 6 verläuft nahezu spitz nach oben.

So ist sichergestellt, dass das verlorene Erntegut, welches aus der Ballenformeinrichtung 3 an den umlaufenden Pressmitteln 4 austritt, von oben in eine Verzweigung aufgeteilt wird. Das austretende Erntegut gleitet vom oberen Teil der Verkleidung 5 an der Erhebung 6 und somit an der Deichsel 2 vorbei. Erntegutansammlungen auf der Deichsel 2 werden so zuverlässig verhindert.

Die Erhebung 6 in der Verkleidung 5 weist eine Höhe von 30mm gegen über der Verkleidungsgrundhöhe auf. Durch diese Höhe wird verhindert, dass Erntegut auf die Erhebung 6 gelangt.

Der Bereich außerhalb der Erhebung 6 weist einen Neigungswinkel gegenüber der Bodenebene in Fahrtrichtung von 15 Grad auf. Die Erhebung 6 weist einen ähnlichen Winkel auf.

### Bezugszeichenliste

- 1.: Landwirtschaftliche Rundballenpresse
- 2.: Deichsel
- 3.: Ballenformeinrichtung
- 4.: Pressmittel
- 5.: Verkleidung
- 6.: Erhebung
- 7.: Seitliche Schutzvorrichtungen

## Patentansprüche

1. Landwirtschaftliche Rundballenpresse (1) mit einer Deichsel (2) zum Anhängen an eine Zugmaschine zum Aufnehmen und Pressen von landwirtschaftlichem Erntegut, wie Heu, Stroh, Gras oder dergleichen mit einer Ballenformeinrichtung (3), bei der während des Pressvorgangs im Bereich umlaufender Pressmittel (4) Erntegut austritt und in einen vorderen Bereich der landwirtschaftlichen Rundballenpresse (1) oberhalb von Funktionseinheiten, wie einer Bindevorrichtung und/oder Wickelvorrichtung gefördert wird, wobei dieser Bereich von einer Verkleidung (5) wenigstens teilweise abgedeckt ist, **dadurch gekennzeichnet, dass** die Verkleidung (5) entlang einer vertikalen Mittelebene eine Erhebung (6) zur Abweisung von austretendem Erntegut aufweist, die von oben nach unten hin breiter werdend ausgeprägt ist.

2. Landwirtschaftliche Rundballenpresse (1) nach Anspruch 1, **dadurch gekennzeichnet, dass** sich die Erhebung (6) in etwa mittig der Verkleidung (5) erstreckt.

3. Landwirtschaftliche Rundballenpresse (1) nach zumindest einem der vorherigen Ansprüche, **dadurch gekennzeichnet, dass** die Erhebung (6) in der Verkleidung (5) an der obersten Stelle in etwa spitz ausgeprägt ist.

4. Landwirtschaftliche Rundballenpresse (1) nach zumindest einem der vorherigen Ansprüche, **dadurch gekennzeichnet, dass** die Erhebung (6) in der Verkleidung (5) an der untersten Stelle in etwa so breit wie die Deichsel (2) ausgeprägt ist.

5. Landwirtschaftliche Rundballenpresse (1) nach zumindest einem der vorherigen Ansprüche, **dadurch gekennzeichnet, dass** die Erhebung (6) in der Verkleidung (5) dachförmig mit Kehlen ausgeprägt ist.

6. Landwirtschaftliche Rundballenpresse (1) nach zumindest einem der vorherigen Ansprüche, **dadurch gekennzeichnet, dass** die Erhebung (6) in der Verkleidung (5) eine Höhe von mindestens 30mm gegenüber der Verkleidungsgrundhöhe beträgt.

7. Landwirtschaftliche Rundballenpresse (1) nach zumindest einem der vorherigen Ansprüche, **dadurch gekennzeichnet, dass** die Erhebung (6) in der Verkleidung (5) ein separates Bauteil ist.

8. Landwirtschaftliche Rundballenpresse (1) nach zumindest einem der vorherigen Ansprüche, **dadurch gekennzeichnet, dass** die Verkleidung (5) zumindest in den Bereichen, die tiefer als die Erhebung (6) ausgelegt sind, eine Neigung mit einem Winkel von mindestens 15° gegenüber der Bodenebene in Fahrtrichtung ausweist.

9. Landwirtschaftliche Rundballenpresse (1) nach zumindest einem der vorherigen Ansprüche, **dadurch gekennzeichnet, dass** die Verkleidung (5) so gestaltet ist, dass sie beidseitig an seitlichen Schutzvorrichtungen (7) der landwirtschaftlichen Rundballenpresse (1) anschließt.

## Claims

1. Agricultural round baler (1) comprising a drawbar (2) for attachment to a tractor, which baler is intended for picking up and pressing agricultural crops, such as hay, straw, grass or the like, and comprises a bale forming device (3), in which, during the pressing process, crops escape in the region of rotating pressing means (4) and are conveyed into a front region of the agricultural round baler (1) above functional units, such as a binding apparatus and/or wrapping apparatus, this front region being at least partially covered by a panel (5), **characterised in that** the panel (5) has, along a vertical central plane, a protrusion (6) which is intended for deflecting escaping crops away and which is shaped such that it gets wider from top to bottom.

2. Agricultural round baler (1) according to claim 1, **characterised in that** the protrusion (6) extends approximately in the centre of the panel (5).

3. Agricultural round baler (1) according to at least one of the preceding claims, **characterised in that** the protrusion (6) in the panel (5) is shaped such that it is approximately pointed at the uppermost point.

4. Agricultural round baler (1) according to at least one of the preceding claims, **characterised in that** the protrusion (6) in the panel (5) is shaped such that it is approximately as wide as the drawbar (2) at the lowermost point.

5. Agricultural round baler (1) according to at least one of the preceding claims, **characterised in that** the protrusion (6) in the panel (5) is shaped like a roof with valleys.

6. Agricultural round baler (1) according to at least one of the preceding claims, **characterised in that** the protrusion (6) in the panel (5) has a height of at least 30 mm with respect to the base height of the panel.

7. Agricultural round baler (1) according to at least one of the preceding claims, **characterised in that** the protrusion (6) in the panel (5) is a separate component.

8. Agricultural round baler (1) according to at least one of the preceding claims, **characterised in that** the panel (5) has, at least in the regions which are designed so as to be lower than the protrusion (6), an inclination at an angle of at least 15° with respect to ground level in the direction of travel.

9. Agricultural round baler (1) according to at least one of the preceding claims, **characterised in that** the panel (5) is designed in such a way that it adjoins lateral protective apparatuses (7) of the agricultural round baler (1) on both sides.

## Revendications

1. Presse à balles rondes agricoles (1) comprenant :
un timon (2) pour s'accrocher à une machine de traction, pour recevoir et presser des produits agricoles récoltés tels que du foin, de la paille, de l'herbe ou analogues avec une installation de formation de balles (3) dans laquelle lors du processus de compression, dans la zone du moyen de compression tournants (4) les produits de récolte pour être transporté dans la zone avant de la presse à balles rondes agricole (1) au-dessus d'unité de fonctionnement tel qu'un dispositif lieur et/ou un dispositif d'enveloppement, cette zone étant au moins partiellement recouverte d'un habillage (5),
**caractérisé en ce que**
l'habillage (5) comprend, le long d'un plan médian vertical, un bossage (6) pour dévier les produits de récoltes sortants qui vient en saillie du haut vers le bas en s'élargissant.

2. Presse à balles rondes agricoles (1) selon la revendication 1, **caractérisée en ce que**
le bossage (6) s'étend sensiblement au milieu de l'habillage (5).

3. Presse à balles rondes agricoles (1) selon au moins une des revendications précédentes,
**caractérisée en ce que**
le bossage (6), dans sa position la plus élevée vient en saillie sensiblement en pointe dans l'habillage (5).

4. Presse à balles rondes agricoles (1) selon au moins une des revendications précédentes,
**caractérisée en ce qu'**
à son endroit le plus bas, le bossage (6) est formé dans l'habillage (5), avec une largeur sensiblement égale à celle du timon (2).

5. Presse à balles rondes agricoles (1) selon au moins une des revendications précédentes,
**caractérisée en ce que**
le bossage (6) est formé dans l'habillage (5) en forme de toit avec des gorges.

6. Presse à balles rondes agricoles (1) selon au moins une des revendications précédentes,
**caractérisée en ce que**
le bossage (6), dans l'habillage (5), représente une hauteur d'au moins 30 mm par rapport à la hauteur de base de l'habillage.

7. Presse à balles rondes agricoles (1) selon au moins une des revendications précédentes,
**caractérisée en ce que**
le bossage (6) est une pièce séparée de l'habillage (5).

8. Presse à balles rondes agricoles (1) selon au moins une des revendications précédentes,
**caractérisée en ce que**
l'habillage (5), au moins dans les zones qui sont plus profondes que le bossage (6) a une inclinaison avec un angle d'au moins 15° par rapport au plan du sol dans la direction de roulement.

9. Presse à balles rondes agricoles (1) selon au moins une des revendications précédentes,
**caractérisée en ce que**
l'habillage (5) est réalisé pour rejoindre des deux côtés des dispositifs de protection latéraux (7) de la presse à balles rondes agricole (1).
